# EUROPEAN PATENT APPLICATION

(11) **EP 2 290 924 A1**
(43) Date of publication of application: **02.03.2011**
(21) Application number: 10173805.2
(22) Date of filing: 24.08.2010
(51) Int. Cl.: H04M 1/725, G06F 17/28

(54) **Converting text messages into graphical image strings**

(30) Priority: 24.08.2009 ES 200930619
(71) Applicant: Vodafone Group plc, Newbury, Berkshire RG14 2FN (GB); Vodafone España, S.A.U., 28108 Alcobendas (ES)
(72) Inventor: Rubio Andres, Francisco, E-28050, Madrid (ES); Touset Rios, Miguel Angel, E-28050, Madrid (ES); Almodovar Herraiz, Daniel, E-28050, Madrid (ES)
(74) Representative: Keston, David Arthur

(57) **Abstract**

To generate graphical image strings that graphically represent the full meaning of the content of text messages, a text message containing at least one sentence to be converted into graphical format is first analyzed to identify, for each sentence: the subject; the at least one verb associated with the subject, if any; and the substantives not referring to a person, if any. A graphical representation of the subject is then obtained for each sentence. Likewise a first graphic database is accessed to obtain a graphical representation of the substantives not referring to a person included in each sentence. A modified graphical representation of the subject is then obtained showing the subject performing the action indicated by the at least one associated verb. Finally, these graphical representations are combined into a graphical image string.

## Description

### Field of the Invention

The present invention is comprised within the field of methods for converting text information into graphical format. The invention is more specifically aimed to convert the status information of a user in an Internet social network, such as Facebook, into a graphical image string, so that other contacts can easily, and graphically, obtain the status of said user.

### Background of the Invention

The current scenario about the status of contacts in Internet social networks is a collection of separate sources with different formats. The status can be user-generated, when Internet users write their own messages, or automatically-generated, when the servers or the devices automatically generate registers of presence or activity.

The user-generated status, dominant in the Internet social networks (e.g. Facebook, Twitter), consists generally in text messages. It's a phrase with a verb and a noun but in some cases is a more elaborated phrase. These textual phrases are shown in a text like a book and usually using time as the only parameter to put them in order. Only the more innovative webs like ZYB have a friend player with these messages and you can forward or rewind the time where the messages appeared.

The automatic registers generated by servers, fixed/mobile network nodes or devices have very different and disparate formats, and are not collected or available.

The status is then a feature common in all the social networks. The status generally is just an answer to the question "what are you doing now?". Most of the social networks, aggregators and software used to follow the friend's updates provide special relevance to this information. In addition, it is possible to get status also from communication networks, such as the IMS presence features in the fixed and mobile telecommunication systems.

Web and mobile services (such as Facebook, ZYB, Twitter) send you continuously a lot of information about different people. Also the mobile telephony networks have registers of IMS presence, made calls, missed calls, voice mails, lack of coverage, etc. The problem arises because there is so much information to process and read from all those different sources (e.g. social networks, telecommunications networks) and contacts (e.g. friends, workmates, family members).

US Patent application US2007239631 discloses a method for generating a graphical image string to convey an intended message. The method enables a user to select one or more graphics from a graphic language database, wherein the annotations (or descriptions) associated with each graphic selected can be combined to convey the intended message. A common sense augmented translation of the combined graphics can also be performed in order to convert the graphical image string into a text message. In addition, US2007239631 discloses (in figure 4) a method for translating a text message into a graphic message. However, said method performs a primitive and poor translation, since it only translates nouns and verbs and normally the result is a graphic string combined with text message to convey an understandable message. The method is carried out by extracting the context of the text message, leaving only nouns and verbs, accessing a graphic language database and an annotation database in order to locate the graphical images having annotations that correspond with the extracted context. Once the graphical images have been located, the images are combined into a graphic message, which normally includes words or phrases interspersed throughout the string of graphical images in order to interconnect the graphical images, to obtain an understandable message.

The present invention seeks to address the shortcomings in the known methods for converting text messages into graphical image strings.

### Description of the Invention

The invention relates to a method for converting text messages into graphical image strings according to claim 1, to a system according to claim 11 and to an electronic device according to claim 10. Preferred embodiments of the system and of the method are defined in the dependent claims.

The object of the method of the present invention is to generate graphical image strings that graphically represent the content of text messages. The method comprises:
- obtaining a text message containing at least one sentence to be converted into graphical format;
- analyzing the at least one sentence to identify, for each sentence:
   - the subject;
   - the at least one verb associated with the subject, if any;
   - the substantives not referring to a person, if any;
- obtaining, for each sentence, a graphical representation of the subject;
- accessing a first graphic database to obtain a graphical representation of the substantives not referring to a person included in each sentence;
- obtaining a modified graphical representation of the subject showing the subject performing the action indicated by the at least one associated verb;
- combining graphical representations previously obtained into a graphical image string.

The method can further comprise:
- identifying, for each sentence, the substantives referring to a person included in the sentence, if any;
- obtaining, for each sentence, a graphical representation of the substantives referring to a person included in the sentence.

In a preferred embodiment the method also comprises:
- identifying, for each sentence, the at least one verb associated to each substantive referring to a person, if any;
- obtaining a modified graphical representation of each substantive referring to a person showing each substantive performing the action indicated by the at least one associated verb.

The method preferably comprises:
- identifying, for each sentence, the adjectives included in the sentence associated with substantives not referring to a person, if any;
- obtaining a modified graphical representation of the substantives not referring to a person showing the substantive modified by the quality of the corresponding adjective.

In yet another preferred embodiment the method also can comprise:
- identifying, for each sentence, the adverbs included in the sentence, if any, and the verb or adjective associated to each adverb;
- for each adverb associated to an adjective, obtaining a modified graphical representation of the corresponding substantive not referring to a person showing the substantive modified by the quality of the corresponding adjective modified with the adverb;
- for each adverb associated to a verb, obtaining a modified graphical representation of the corresponding subject showing the subject performing the action indicated by the associated verb modified by the adverb.

The text message is preferably the status information of a user in an Internet social network, the subject of each sentence is preferably said user and the graphical representation of the subject is preferably an avatar of said user in said Internet social network.

The method can also comprise, for each substantive referring to a person included in each sentence, checking if said substantive corresponds to a user of the Internet social network, and in that case obtaining the avatar of said user in said Internet social network as the graphical representation of the subject.

In a preferred embodiment the method further comprises, if a graphical representation of a substantive cannot be obtained in the first graphic database, obtaining a graphical representation of said substantive by generating an image showing the text of the substantive.

The modified graphical representation of the subject showing the subject performing the action indicated by the at least one associated verb can be obtained by at least on of the following ways:
- retrieving said modified graphical representation from a second graphic database storing, for each subject, a plurality of images showing the subject performing different actions, each action associated to a verb;
- retrieving an image associated with the corresponding verb from a third graphic database storing a plurality of predefined images, each one associated to a different verb, and combining said retrieved image with the graphical representation of the subject to obtain the modified graphical representation of the subject.

In accordance with a further aspect of the present invention there is provided an electronic device for converting text messages into graphical image strings, said graphical image strings graphically representing the content of the text messages. The electronic device comprises data processing means configured to:
- obtain a text message containing at least one sentence to be converted into graphical format;
- analyze the at least one sentence to identify, for each sentence:
   - the subject;
   - the at least one verb associated with the subject, if any;
   - the substantives not referring to a person, if any;
- obtain, for each sentence, a graphical representation of the subject;
- access a first graphic database to obtain a graphical representation of the substantives not referring to a person included in each sentence;
- obtain a modified graphical representation of the subject showing the subject performing the action indicated by the at least one associated verb;
- combine graphical representations previously obtained into a graphical image string.

In accordance with yet a further aspect of the present invention there is provided a system for converting text messages into graphical image strings, said graphical image strings graphically representing the content of the text messages. The system comprises:
- a first graphic database storing graphical representations of substantives not referring to a person;
- an electronic device configured to:
   - obtain a text message containing at least one sentence to be converted into graphical format;
   - analyze the at least one sentence to identify, for each sentence:
      o the subject;
      o the at least one verb associated with the subject, if any;
      o the substantives not referring to a person, if any;
   - obtain, for each sentence, a graphical representation of the subject;
   - access the first graphic database to obtain a graphical representation of the substantives not referring to a person included in each sentence;
   - obtain a modified graphical representation of the subject showing the subject performing the action indicated by the at least one associated verb;
   - combine graphical representations previously obtained into a graphical image string.

The system preferably also comprises a second graphic database storing, for each subject, a plurality of images showing the subject performing different actions, each action associated to a verb; the electronic device being further configured to retrieve, from the second graphic database, the modified graphical representation of the subject showing the subject performing the corresponding action.

The system can further comprise a third graphic database storing a plurality of predefined images, each one associated to a different verb; the electronic device being further configured to retrieve, from the third graphic database, an image associated with the corresponding verb, and to combine said retrieved image with the graphical representation of the subject to obtain the modified graphical representation of the subject.

Thus when compared to known solutions, the method proposed by the present invention performs a more sophisticated translation to obtain full-meaning phrases and a full text-to-graphic translation. Said translation can include not only nouns and verbs, but also adjectives, adverbs, personalized subjects (which can be the avatars of the Internet social network users) and a graphical relationship between the different parts of the sentence (noun, verbs, adjectives, subjects,...). For instance, the present invention can convert the text message "Paul is thinking of a red car" into a graphical string comprising a graphical image of Paul's avatar in the Internet social network, a speech balloon next to the head of Paul's avatar, a graphical image of a car inside the speech balloon, and more specifically a car painted in red. Therefore, all the parts of the sentence are intimately linked in a meaningful graphic string and the user can obtain a complete translation of the text message.

The present invention allows the user an easy way to understand continuous changes in the status of each contact in a graphical view. This brings a number of advantages:
- Saves times of the user, since seeing pictures is much more immediate than reading text or listening to audio. This is especially important nowadays with the increasing overflow of information that human beings have to process.
- Helps illiterate people and in general people finding difficulties in reading a lot of text in different formats (e.g. depending on the source)
- Makes interaction with the new services more fun, so helping to introduce people, such as older people, in the "information society".

### Brief Description of the Drawings

A series of drawings which aid in better understanding the invention and which are expressly related with an embodiment of said invention, presented as a non-limiting example thereof, are very briefly described below.
Figure 1 shows the system object of the present invention.
Figures 2 to 8 show different examples of the operation of aspects of the invention.

### Description of a Preferred Embodiment of the Invention

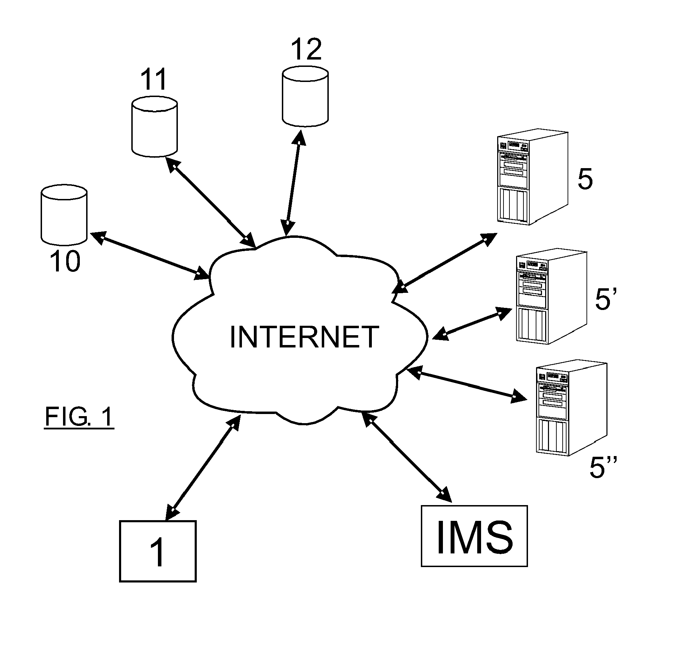

The present invention provides a system, method and electronic device for converting text messages into graphical image strings. **Figure 1** shows a system suitable for implementing the invention. A preferred embodiment of the method has the following steps:
1. Collection of status information of a contact from different sources, normally different servers (5,5',5"):
   - As a minimum, it would collect info from at least one user-generated source (e.g. Twitter server 5).
   - If available, it would collect info from several user-generated sources (e.g. Twitter server 5, Facebook server 5', ZYB server 5"). The aggregation could be done via APIs (Application Programming Interface) provided by those sources for developers. This would require identity management in order to map the different aliases or accounts of the contacts in the different sources.
   - If available, it would collect info from several automatically-generated sources (e.g. IMS presence from mobile operator, call registers uploaded from the device). The aggregation could be done via APIs provided by the operators or via active uploads from client applications at the device. This would require again identity management, and also privacy management in order to authorise access to those network information of registers.
2. Conversion of the contact status collected along time into a graphical story or "comic". This comic will inform about the activity of the contact in an immediate, attractive visual way.

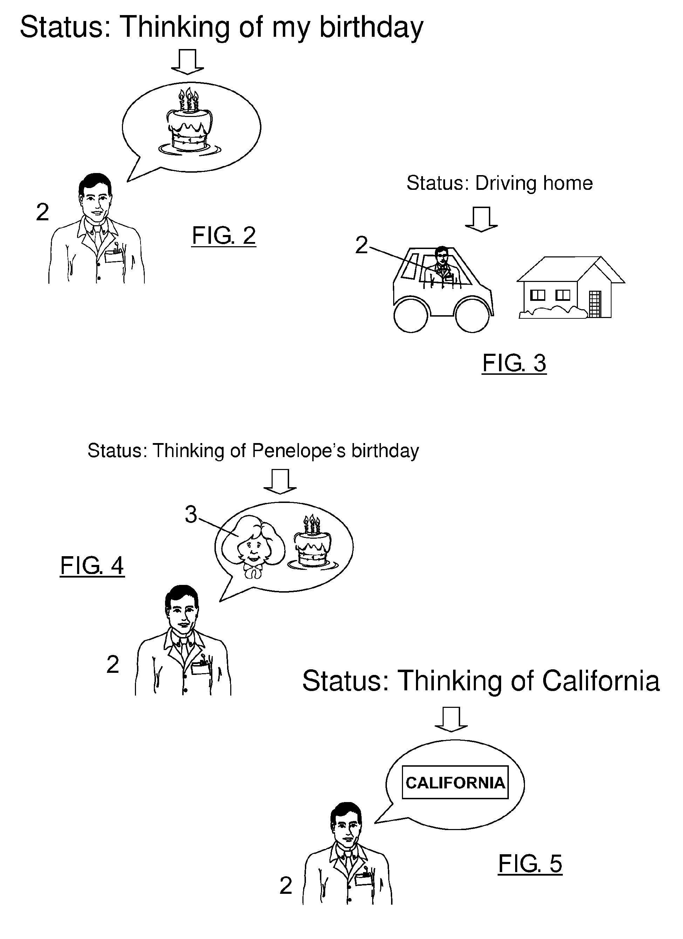

For this purposes, the proposed invention takes this text per contact and detects verbs, nouns and adjectives. Once these have been identified, it takes the contact's avatar (the avatar can be obtained automatically per contact from any of the sources or can be previously personalized by the user), chooses the main verb of the phrase and modifies the avatar to show that action, using the others nouns and adjectives to modify the image. For example, as shown in **Figure 2**, if my status is "thinking of my birthday" the algorithm detects 'thinking' and goes to a database where the avatar 2 is modified to look like thinking; then, the noun associated to the action of thinking, in this case 'birthday', is associated in the database with a cake with candles and this appears in a balloon over the head of the avatar. Afterwards, the next update in your status can be "Driving home", as shown un **Figure** 3, in the same way we take the animation of your avatar and show him in a picture driving, and show the home concept (i.e. arriving to a house). The same can be done with the following updates; in this way what we finally have is a comic with all the status changes in a page or in a row if you are reading the updates of this person in a mobile.

There are multiple possible options for this "comic story", since the picture can be enriched with several nouns and verbs and avatars of other users can also be used. For example if I write "thinking of Penelope's birthday", as shown in **Figure 4****,** the image will show a man (or my avatar) thinking and in the air Penelope avatar 3 close to (or blowing out) the candles of a cake. Adjectives and adverbs can also be shown in the picture if they are available in the database.

The invention provides the analysis of the text in order to identify the different verbs, nouns, adverbs, adjectives, etc.

Therefore, the invention gets the avatar 2 and modifies it with the main verb, this image is later modified with the additional information found in the text.

In case a substantive noun does not exist or is not found in the graphic database corresponding to substantives, first graphic database 10, it can appear in the image string in text format or as an image showing the text, as shown in **Figure 5****.**

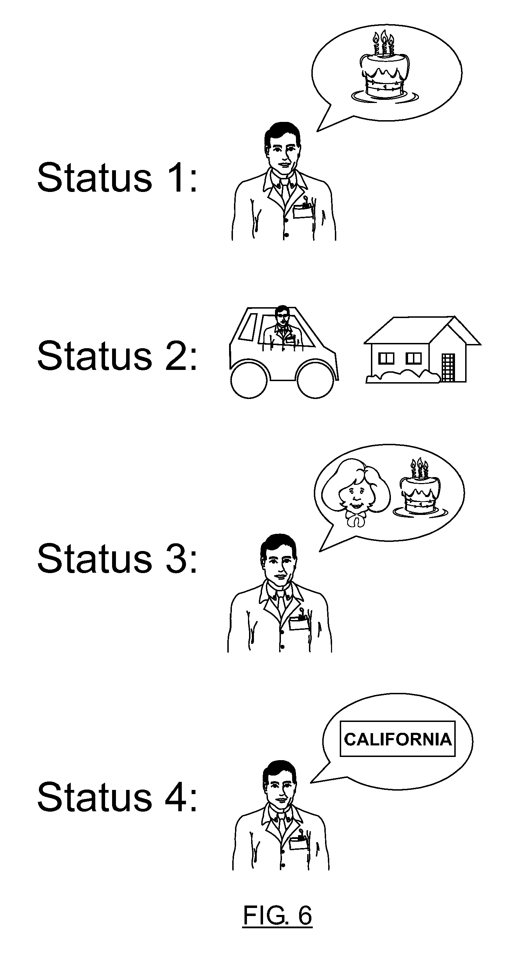

Finally, the images of the same user are joined in a temporary succession in order to obtain a comic with the changes, such as shown in **Figure 6****.**

In a preferred embodiment the system, as shown in **Figure 1****,** is formed of:
- An electronic device 1, configured for obtaining the text message (in a preferred embodiment the status of the user in an Internet social network; for instance, by accessing the corresponding server 5,5',5"). Different APIs can be used to obtain the status of the user. The status of the user is preferably in text format, although it can be first obtained in audio format and then converted into text by an application.
- The different databases (10,11,12) used by the electronic device 1.

The text message to be converted into graphical format is usually manually input by the user of an Internet social network. The corresponding Internet social network server (5,5'5,") receives the text message showing the status of the user. This text message contains a sentence which can include substantives, verbs, adjectives, adverbs, etc., expressing a thought or state or mind of the user. This text message can be retrieved from the Internet social servers (5,5',5") by using APIs or other specific applications.

Once the electronic device 1 receives the text message, it performs the following actions:
- Analysis of the substantives. All the substantives included in the text message are obtained. The subjects of the different sentences included in the text message are identified. The substantives referring to a person receive a special treatment. The subject and the substantives referring to a person would be normally represented by a avatar or image. The electronic device 1 can ask the different Internet social networks information about the subject, to obtain an image or avatar from them. Optionally, the avatar (or photo) can be requested and retrieved directly from the user.

Substantives not referring to a person can be retrieved from a first graphic database 10 which links substantives with images. Adjectives associated to substantives will be used to modify the substantive.

In this step the flow of information will be the following:
Input: Text message (substantives, verbs, adjectives, adverbs)
Output: avatar or images of subjects and substantives referring to people + images of substantives + rest of the text message.

- Avatar modification. In this step the subjects and substantives referring to a person are modified to show the action of the verbs. This is achieved by using a graphic database (11,12) which links a verb with an image. In case the verb is not found in this database, an image showing the text of the verb can be used. The avatar modification can be carried out in different ways, for example:
   a) Storing in a second graphic database 11 for each user a plurality of images or photographs showing the user performing different actions (e.g., driving, sleeping, resting, thinking, etc.)
   b) Storing in a third graphic database 12 a plurality of predefined images showing a person performing different actions (drinking, running, etc.), and combining the image previously obtained of the avatar with the corresponding predefined image describing the action. The combination would normally consist in replacing the head of the predefined image showing the action with the head of the avatar.
   c) Using symbolic elements (e.g., arrows or speech balloons) for representing the action of the verb. This is specially useful for verbs such as "think", "say", "tell", "imagine", "listens", etc. The object of this verb would be inside the speech balloon.
   d) A combination of the previous ways.
In this step the flow of information will be the following:
Input: avatar or images of subjects and substantives referring to people + images of substantives + rest of the text message.
Output: modified avatar + modified image of substantives referring to people + images related to the verbs + images of substantives + rest of the text message.

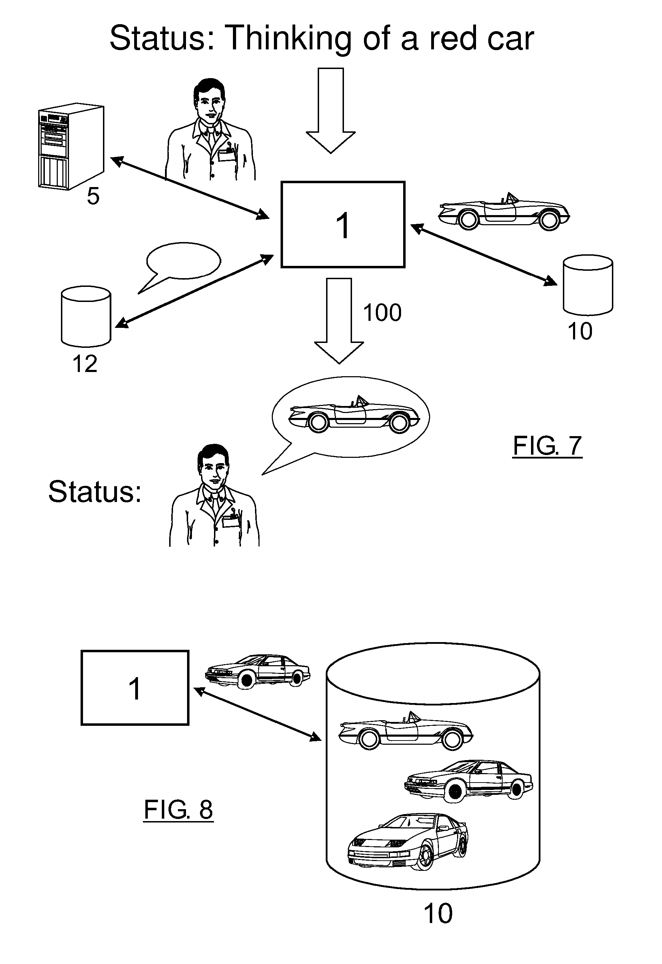

- Substantives modification: For the adjectives included in the sentence and referring to a person, the substantive image should be modified. For instance, if the sentence says "Thinking in a red car", there are two ways ob obtaining the substantive image modified by the adjective. The first database the 10 can store cars of different colours (blue car, red car, black car), so the association "red car" with an image is directly performed. Other way of obtaining the substantive image modified by the adjective is retrieving an image of a car from the first graphic database 10, for instance a blue car with white background, and replacing the blue colour with red, obtaining a red car, such as shown in Figure 7.
- Creation of the image string. In this step the image string is composed 100 by using the images previously obtained.

The user can previously select a style or template which should be used for select the images in the database. For instance, the user can select images with "comic" style, "manga" style, "pop art" style, etc. This way if in a database there are different images associated with a substantive (for instance, a car), the database would provide the image associated also with the selected style (e.g., a car in "comic" style, if the user selects "comic" style, as shown in **Figure 8****)** The user could also select the special treatment of the images: sepia, black and white, etc.

The different image strips are showed, sorted according to time, as shown in Figure 6.

The image string can be finally adapted to be sent to a computer, a mobile phone, a smartphone, etc.

## Claims

1. Method for converting text messages into graphical image strings, said graphical image strings graphically representing the content of the text messages, **characterized in that** the method comprises:
- obtaining a text message containing at least one sentence to be converted into graphical format;
- analyzing the at least one sentence to identify, for each sentence:
• the subject;
• the at least one verb associated with the subject, if any;
• the substantives not referring to a person, if any;
- obtaining, for each sentence, a graphical representation of the subject;
- accessing a first graphic database (10) to obtain a graphical representation of the substantives not referring to a person included in each sentence;
- obtaining a modified graphical representation of the subject showing the subject performing the action indicated by the at least one associated verb;
- combining graphical representations previously obtained into a graphical image string.

2. Method according to claim 1, the method further comprising:
- identifying, for each sentence, the substantives referring to a person included in the sentence, if any;
- obtaining, for each sentence, a graphical representation of the substantives referring to a person included in the sentence.

3. Method according to claim 2, the method further comprising:
- identifying, for each sentence, the at least one verb associated to each substantive referring to a person, if any;
- obtaining a modified graphical representation of each substantive referring to a person showing each substantive performing the action indicated by the at least one associated verb.

4. Method according to any of claims 1 to 3, the method further comprising:
- identifying, for each sentence, the adjectives included in the sentence associated with substantives not referring to a person, if any;
- obtaining a modified graphical representation of the substantives not referring to a person showing the substantive modified by the quality of the corresponding adjective.

5. Method according to claim 4, the method further comprising:
- identifying, for each sentence, the adverbs included in the sentence, if any, and the verb or adjective associated to each adverb;
- for each adverb associated to an adjective, obtaining a modified graphical representation of the corresponding substantive not referring to a person showing the substantive modified by the quality of the corresponding adjective modified with the adverb;
- for each adverb associated to a verb, obtaining a modified graphical representation of the corresponding subject showing the subject performing the action indicated by the associated verb modified by the adverb.

6. Method according to any of claims 1-5, wherein the text message is the status information of a user in an Internet social network, the subject of each sentence is said user and the graphical representation of the subject is an avatar of said user in said Internet social network.

7. Method according to claims 2 and 6, the method further comprising:
- for each substantive referring to a person included in each sentence, checking if said substantive corresponds to a user of the Internet social network, and in that case obtaining the avatar of said user in said Internet social network as the graphical representation of the subject.

8. Method according to any of claims 1 to 7, the method further comprising:
- if a graphical representation of a substantive cannot be obtained in the first graphic database (10), obtaining a graphical representation of said substantive by generating an image showing the text of the substantive.

9. Method according to any of claims 1 to 8, wherein the modified graphical representation of the subject showing the subject performing the action indicated by the at least one associated verb is obtained by at least on of the following ways:
- retrieving said modified graphical representation from a second graphic database (11) storing, for each subject, a plurality of images showing the subject performing different actions, each action associated to a verb;
- retrieving an image associated with the corresponding verb from a third graphic database (12) storing a plurality of predefined images, each one associated to a different verb, and combining said retrieved image with the graphical representation of the subject to obtain the modified graphical representation of the subject.

10. Electronic device for converting text messages into graphical image strings, said graphical image strings graphically representing the content of the text messages, **characterized in that** the electronic device comprises data processing means configured to:
- obtain a text message containing at least one sentence to be converted into graphical format;
- analyze the at least one sentence to identify, for each sentence:
• the subject;
• the at least one verb associated with the subject, if any;
• the substantives not referring to a person, if any;
- obtain, for each sentence, a graphical representation of the subject;
- access a first graphic database (10) to obtain a graphical representation of the substantives not referring to a person included in each sentence;
- obtain a modified graphical representation of the subject showing the subject performing the action indicated by the at least one associated verb;
- combine graphical representations previously obtained into a graphical image string.

11. System for converting text messages into graphical image strings, said graphical image strings graphically representing the content of the text messages, **characterized in that** the system comprises:
- a first graphic database (10) storing graphical representations of substantives not referring to a person;
- an electronic device configured to:
• obtain a text message containing at least one sentence to be converted into graphical format;
• analyze the at least one sentence to identify, for each sentence:
o the subject;
o the at least one verb associated with the subject, if any;
o the substantives not referring to a person, if any;
• obtain, for each sentence, a graphical representation of the subject;
• access the first graphic database (10) to obtain a graphical representation of the substantives not referring to a person included in each sentence;
• obtain a modified graphical representation of the subject showing the subject performing the action indicated by the at least one associated verb;
• combine graphical representations previously obtained into a graphical image string.

12. System according to claim 11, the system further comprising a second graphic database (11) storing, for each subject, a plurality of images showing the subject performing different actions, each action associated to a verb;
the electronic device being further configured to retrieve, from the second graphic database (11), the modified graphical representation of the subject showing the subject performing the corresponding action.

13. System according to any of claims 11 to 12, the system further comprising a third graphic database (12) storing a plurality of predefined images, each one associated to a different verb;
the electronic device being further configured to retrieve, from the third graphic database (12), an image associated with the corresponding verb, and to combine said retrieved image with the graphical representation of the subject to obtain the modified graphical representation of the subject.
